# DEMANDE DE BREVET EUROPEEN

(11) **EP 1 418 499 A1**
(43) Date de publication de la demande: **12.05.2004**
(21) Numéro de dépôt: 02024883.7
(22) Date de dépôt: 08.11.2002
(51) Int. Cl.: G06F 9/445

(54) **Procédé de configuration assistée de logiciels ou de materiel informatique**

(71) Demandeur: Dunes Technologies S.A., 1002 Lausanne (CH)
(72) Inventeur: Broquère, Stéphane, 1202 Genève (CH); Hochuli, Stefan, 1025 St-Sulpice (CH)
(74) Mandataire: Wenger, Joel-Théophile

(57) **Abrégé**

La présente invention concerne un procédé de configuration assistée de logiciels ou de matériel informatique. Ce procédé a pour but de permettre à un utilisateur de configurer un logiciel ou du matériel informatique en constituant un ensemble de données permettant cette configuration. Ce procédé comporte les étapes de détermination des modules du procédé de configuration correspondants aux domaines de compétences de différents types d'utilisateurs, de détermination pour chaque module, des données de configuration résultantes de ce module et des droits permettant l'accès à ce module, et de détermination de l'enchaînement des modules selon une structure série et/ou parallèle.

L'exécution du procédé comprend les pas consistant à déterminer pour au moins un module du procédé, les droits qui y sont associés, à identifier un utilisateur demandant l'accès au procédé, à vérifier les droits d'accès de cet utilisateur et les comparer avec les droit d'accès liés audit module, à donner l'accès audit module à cet utilisateur bénéficiant des droits d'accès, à proposer des choix à cet utilisateur autorisé, lui permettant d'introduire des valeurs de paramètres, à sélectionner les étapes suivantes du procédé de configuration en fonction des choix et des données précédemment introduites par l'utilisateur et à sauvegarder ledit ensemble de données.

## Description

La présente invention concerne un procédé de configuration assistée de logiciels ou de matériel informatique.

Actuellement, on connaît des procédés de configuration de logiciels ou de matériel informatique qui proposent à l'utilisateur de l'accompagner dans les différentes étapes du processus de configuration. Ces procédés comportent un certain nombre de questions auxquelles l'utilisateur doit répondre, ces questions définissant des choix qui déterminent quelle est l'étape suivante du processus. Ces procédés sont destinés à l'implémentation d'applications relativement simples destinées à un seul utilisateur.

A titre d'exemple, un tel procédé peut par exemple être destiné à configurer l'installation d'une nouvelle imprimante sur un ordinateur ou un réseau d'ordinateurs. Une autre application pourrait par exemple consister à configurer l'installation d'un logiciel particulier sur un ordinateur.

Ces procédés présentent un certain nombre d'inconvénients. En particulier, lorsque le procédé est démarré, il est impératif de poursuivre l'ensemble du processus jusqu'à la dernière étape, faute de quoi l'application qui est liée à ce procédé ne sera pas opérationnelle. Lorsque le procédé de configuration, dénommé également "assistant", est utilisé par l'intermédiaire d'une liaison de type réseau, si cette liaison est interrompue, l'ensemble du processus est stoppé. L'installation de l'application doit être reprise au départ.

De plus, les procédés de configuration tels que mentionnés ci-dessus sont destinés à être utilisés par un seul utilisateur et exigent un séquencement prédéterminé des étapes qu'ils comportent. Il n'est pas possible de partager un tel procédé de configuration entre plusieurs utilisateurs.

Avec l'apparition de configurations complexes, les limites sont rapidement atteintes avec un tel procédé car les informations à introduire sont trop nombreuses et disparates pour être introduite lors d'une configuration unique. Dans la pratique, on constate que ce type de configuration se fait d'une manière classique, c'est-à-dire que l'administrateur du système ouvre successivement des fenêtres de configuration et introduit les données manuellement. Ce type de configuration n'est accessible que pour des personnes ayant un niveau de connaissance élevé.

La présente invention se propose de pallier les inconvénients des procédés de l'art antérieur en réalisant un procédé de configuration d'applications complexes qui soit accessible à des utilisateurs sans connaissance particulière.

Ce but est atteint par un procédé de configuration assistée de logiciels ou de matériel informatique, ce procédé ayant pour but de constituer un ensemble de données permettant la configuration d'un logiciel ou de matériel informatique par au moins un utilisateur, ce procédé étant caractérisé par les étapes suivantes :
- détermination des modules du procédé de configuration correspondants aux domaines de compétences de différents types d'utilisateurs,
- détermination pour chaque module, des données de configuration résultantes de ce module et des droits permettant l'accès à ce module,
- détermination de l'enchaînement des modules selon une structure série et/ou parallèle.

La présente invention et ses avantages seront mieux compris en référence à la description détaillée d'un mode de réalisation et aux dessins annexés dans lesquels :
- la figure 1 est un exemple d'organigramme représentant schématiquement un procédé de configuration assistée selon la présente invention; et
- la figure 2 illustre schématiquement un détail du procédé selon l'invention.

En référence à ces figures, le procédé de configuration comporte un certain nombre de modules, chaque module comportant des étapes de processus et un certain nombre de questions auxquelles doit répondre l'utilisateur en effectuant un choix ou introduisant des données ou des valeurs. En d'autres termes, le processus comporte un certain nombre de paramètres auxquels il faut attribuer des valeurs. De la réponse à chacune de ces questions ou de la valeur des paramètres dépend l'étape ou les étapes suivantes du processus. Dans la suite du texte, on parlera indifféremment d'utilisateur ou de groupe d'utilisateurs. En pratique, des tâches, des fonctions ou des savoir-faire sont généralement associés à un groupe d'utilisateurs plutôt qu'à une seule personne.

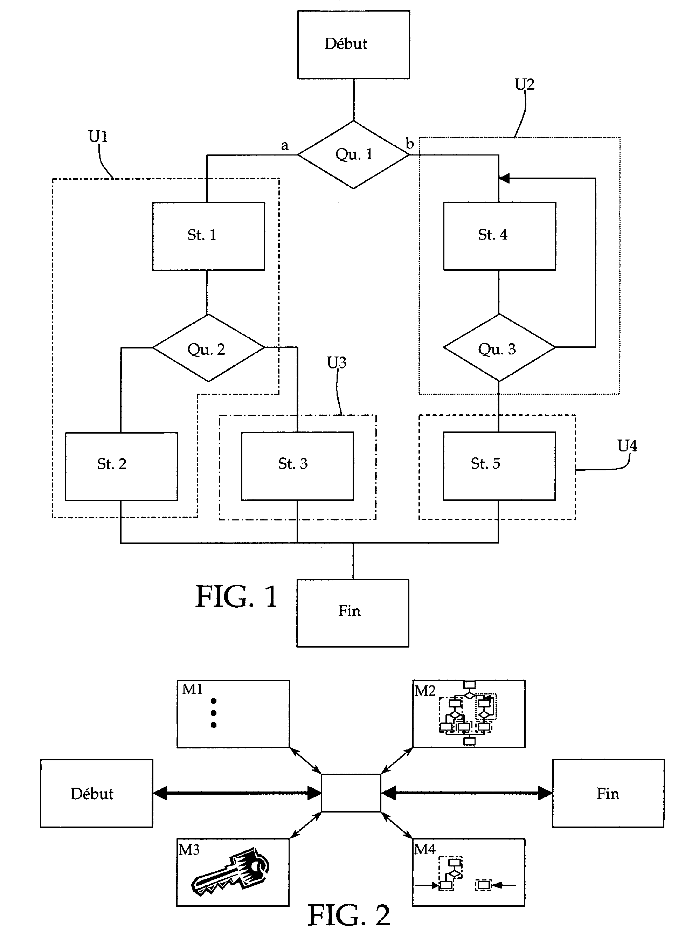

En se référant à la figure 1, les modules du processus sont représentés par des polygones en traits interrompus, référencés U1, U2, U3 et U4, les étapes du processus sont représentées par des rectangles en traits continus référencés St.1, St.2, ... et les questions sont représentées par des losanges référencés Qu.1, Qu.2, .... A titre d'exemple, si l'utilisateur répond à la question Qu.1 par un premier choix (a), le processus se poursuit à l'étape St.1. Si le deuxième choix (b) est fait par l'utilisateur, le processus continue à l'étape St.4. Comme cela est représenté par la figure 1, les modules peuvent être disposés partiellement en parallèle, comme les modules U1 et U2 par exemple, et partiellement en série, comme les modules U2 et U4. Toutes sortes de combinaisons de ces modules peuvent être envisagées.

Le but du procédé est de constituer un fichier de configuration FC dans lequel interviennent tous les utilisateurs en fonction de leurs tâches ou de leur fonction. Pour la commodité de la description, le contenu de ce fichier de configuration est séparé en quatre types d'information.

Pour la gestion du processus selon la présente invention et pour la constitution du fichier de configuration, ces quatre types d'information sont décrits comme étant mémorisés dans quatre zones mémoires, respectivement M1, M2, M3 et M4, comme cela est illustré par la figure 2. Ces zones permettent le suivi du processus de configuration et déterminent également les conditions d'accès à ces données.

La première zone mémoire M1 contient le libellé de toutes les étapes et de toutes les questions formant le procédé. Ces libellés peuvent être mémorisés sous la forme de tables dans une base de données ou de documents en format XML (Extensible Markup Language) par exemple. L'accès à ces données peut se faire en utilisant un protocole d'accès tel que celui connu sous l'acronyme SOAP (Simple Object Access Protocol). Il est clair que d'autres types de formats de données et d'autres protocoles d'accès à ces données peuvent être utilisés.

La deuxième zone mémoire M2 contient l'ordre des étapes et des questions formant le procédé, c'est-à-dire la structure de l'organigramme. La combinaison des zones mémoires M1 et M2 permet donc de définir l'organigramme dans son ensemble, avec la structure des modules, l'ordre des étapes et le libellé des étapes et des questions.

La troisième zone mémoire M3 mémorise des droits qui sont liés aux modules. De façon plus détaillée, il est possible de définir, pour chaque module, chaque étape ou chaque question, quel utilisateur ou quel groupe d'utilisateurs est autorisé à effectuer un choix en répondant à une question, introduire des données, attribuer une valeur à un paramètre ou à générer une étape de processus. Cette gestion des droits permet d'utiliser un procédé de configuration partagé entre plusieurs utilisateurs ou groupes d'utilisateurs ayant chacun accès à un ou plusieurs modules. Pour ceci, chaque utilisateur ou chaque groupe d'utilisateurs est associé à un identifiant qui est par exemple un nom, un mot de passe et/ou un numéro du type PIN code. Cet identifiant est introduit par l'utilisateur lorsque celui-ci souhaite accéder au procédé de configuration.

Finalement, la quatrième zone mémoire M4 mémorise à tout instant, la dernière étape du procédé qui a été atteinte d'une manière individuelle (pour un utilisateur donné) et globale (pour l'ensemble du processus de configuration). Les étapes atteintes sont suivies par un pointeur, qui est présent dans chacun des modules. Ce pointeur est symbolisé par deux flèches dans la quatrième zone mémoire M4 de la figure 2.

Dans un premier temps, avant l'utilisation du procédé pour réaliser le fichier de configuration, il est nécessaire de constituer la structure du procédé. Cette structure est représentée par la figure 1. Pour ceci, on détermine tout d'abord des modules du procédé de configuration qui correspondent aux domaines de compétences de différents groupes d'utilisateurs. Chaque module est associé à des droits d'accès, permettant de déterminer quel groupe d'utilisateur est autorisé à introduire des valeurs ou des données ou à effectuer des choix dans ce module. Finalement, on détermine l'enchaînement des modules, c'est-à-dire la position de chaque module par rapport aux autres. Ceci détermine également quelles sont les opérations qui peuvent être effectuées en parallèles, et lesquelles doivent être effectuées en série.

Lorsque la structure du procédé est définie, pour l'utilisation de ce procédé, la première étape consiste à identifier l'utilisateur ou au moins le groupe auquel il appartient. Ceci permet soit de directement le diriger vers l'un des modules qui le concerne, soit de lui autoriser l'accès au module en cours s'il en possède les droits d'accès ou de lui en interdire l'accès dans le cas contraire. Ensuite, selon l'organigramme prédéterminé, la première étape est proposée. Le libellé de cette étape est déterminé d'après la première zone mémoire M1. Les droits associés à cette étape, c'est-à-dire l'identification du ou des utilisateurs autorisés à générer et à traiter cette étape sont vérifiés dans la troisième zone mémoire M3.

Si l'utilisateur qui a demandé le démarrage du processus bénéficie des droits, la première étape et/ou le premier choix est réalisé. Le fait que ce premier choix ait été réalisé est suivi par le pointeur et est mémorisé dans la quatrième zone mémoire M4. Le procédé de configuration peut être arrêté à ce moment, sans perte d'information.

Grâce à ces différentes étapes, le fichier de configuration final est constitué peu à peu. Pour permettre à plusieurs utilisateurs d'accéder au procédé de configuration, il est possible de sauvegarder le fichier de configuration en un endroit unique dans lequel ce fichier reste. Chaque utilisateur échangera donc des données par la voie d'une liaison avec ce fichier. Une autre manière de permettre l'accès à ce fichier de configuration est de déplacer ce fichier d'un utilisateur à l'autre en fonction des besoins des utilisateurs.

Au moment où le procédé est redémarré, le contenu de la quatrième zone mémoire M4 mémorisant la dernière étape, c'est-à-dire la position du pointeur, est lu en premier lieu. En déterminant ensuite le contenu de la deuxième zone mémoire M2, mémorisant la structure de l'organigramme et en le comparant avec le contenu de la quatrième zone mémoire M4, il est possible de déterminer quelles sont les étapes suivantes à entreprendre. Le contenu de la troisième zone mémoire M3 mémorisant les droits permet de déterminer également quels utilisateurs peuvent réaliser ces étapes.

Selon le procédé de l'invention, il est également possible que différents utilisateurs traitent simultanément des étapes différentes du même procédé. A titre d'exemple, il est possible qu'un premier utilisateur prenne en charge les étapes St.1 et St.2 et la question Qu.2 du premier module (U1) illustrées par la figure 1, alors qu'un deuxième utilisateur prendra en charge l'étape St.4 et la question Qu.3 du deuxième module (U2). Cette utilisation simultanée ou asynchrone par plusieurs utilisateurs différents est rendue possible grâce au fait que la structure en parallèle et/ou en série du procédé, le libellé des étapes et des questions, ainsi que la dernière étape atteinte sont mémorisé dans des zones mémoire. De façon plus détaillée, dans le cas d'une utilisation faite par plusieurs personnes du même procédé, il est nécessaire de mémoriser, dans la quatrième zone mémoire M4 dans l'exemple décrit, la dernière étape atteinte par chacun des utilisateurs. Ceci peut se faire grâce au pointeur d'avancement et à l'identifiant spécifique à chaque utilisateur ou groupe d'utilisateurs, identifiant qui permet également de gérer les droits d'accès.

Le procédé gère également, grâce au contenu de la deuxième zone mémoire M2, qui définit la structure de l'organigramme, la manière selon laquelle les différentes étapes du procédé, traitées par différents utilisateurs, sont réunies de façon à former un procédé unique et cohérent.

Les modifications introduites par chacun des utilisateurs peuvent également donner lieu à des informations dites de services. Ces informations de service peuvent par exemple mentionner le type de modifications effectuées, l'identifiant de la personne qui les a effectuées ainsi qu'une date ou une heure de modification par exemple. Ces informations de service peuvent être mémorisées dans un fichier de rapport. Ce fichier de rapport permet de garder la trace de configurations antérieures et de détecter la cause d'éventuelles pannes intervenues suite à une modification et donc, de les corriger. Ces informations de service permettent également de vérifier si le pointeur d'un module a atteint la dernière étape de ce module. Cette vérification est faite pour chacun des modules. Lorsque les pointeurs de tous les modules ont atteint la dernière étape de celui-ci, l'ensemble du procédé est arrêté et la configuration est terminée.

Le procédé selon l'invention présente des avantages importants par rapport à ceux de l'art antérieur. En effet, étant donné qu'il est possible de mémoriser la dernière étape du processus atteinte, il est possible d'utiliser un tel assistant pour des configurations beaucoup plus complexes que ceux mis en oeuvre actuellement. Il est en effet possible de s'affranchir de l'obligation de terminer l'ensemble du processus en une seule fois. Il est possible que le processus de configuration soit interrompu pour des raisons indépendantes de la volonté de l'utilisateur (coupure de liaison réseau, coupure de l'alimentation, blocage de l'ordinateur). Le procédé de l'invention permet, contrairement aux procédés de l'art antérieur, de garantir qu'il sera possible de mener la démarche de configuration à son terme.

De plus, la mémorisation des étapes du procédé permet également de réaliser des processus plus complexes dans le sens où différents utilisateurs, ayant chacun leur tâche dans le procédé, associée à un savoir-faire particulier, peuvent intervenir dans le même procédé.

## Revendications

1. Procédé de configuration assistée de logiciels ou de matériel informatique, ce procédé ayant pour but de constituer un ensemble de données permettant la configuration d'un logiciel ou de matériel informatique par au moins un utilisateur, ce procédé étant **caractérisé par** les étapes suivantes :
- détermination des modules du procédé de configuration correspondants aux domaines de compétences de différents types d'utilisateurs,
- détermination pour chaque module, des données de configuration résultantes de ce module et des droits permettant l'accès à ce module,
- détermination de l'enchaînement des modules selon une structure série et/ou parallèle.

2. Procédé de configuration selon la revendication 1, **caractérisé en ce que** le module est constitué de plusieurs étapes de configuration et d'un pointeur d'avancement des dites étapes de configuration, permettant à un utilisateur de reprendre une configuration non achevée.

3. Procédé selon les revendications 1 ou 2, **caractérisé en ce que** son exécution comprend les pas suivants :
- initialiser le procédé des revendications 1 ou 2;
- déterminer pour au moins un module du procédé, les droits qui y sont associés;
- identifier un utilisateur demandant l'accès au procédé ;
- vérifier les droits d'accès de cet utilisateur et les comparer avec les droit d'accès liés audit module;
- donner l'accès audit module à cet utilisateur bénéficiant des droits d'accès;
- proposer des choix à cet utilisateur autorisé, lui permettant d'introduire des valeurs de paramètres;
- sélectionner les étapes suivantes du procédé de configuration en fonction des choix et des données précédemment introduites par l'utilisateur ;
- sauvegarder ledit ensemble de données.

4. Procédé de configuration selon la revendication 3, **caractérisé en ce qu'**il est accessible à un seul utilisateur à la fois.

5. Procédé de configuration selon la revendication 3, **caractérisé en ce qu'**il est accessible à plusieurs utilisateurs simultanément.

6. Procédé de configuration selon la revendication 3, **caractérisé en ce qu'**il empêche un utilisateur d'accéder à un module lorsqu'il ne bénéficie pas des droits d'accès à ce module.

7. Procédé de configuration selon la revendication 3, **caractérisé en ce que** chaque utilisateur peut appartenir à un groupe d'utilisateurs, les droits d'accès définis pour un groupe d'utilisateurs étant les mêmes pour chaque membre de ce groupe.

8. Procédé de configuration selon la revendication 3, **caractérisé en ce que** lorsqu'un utilisateur demande l'accès à un module pour lequel il ne bénéficie pas des droits, le procédé comprend les pas suivants :
- rechercher les droits associés à cet utilisateur;
- rechercher les droits associés à chaque module;
- rechercher au moins un module pour lequel l'utilisateur bénéficie des droits d'accès;
- si un tel module a été trouvé, diriger l'utilisateur vers ce module du procédé pour lequel il bénéficie des droits;
- si aucun module pour lequel l'utilisateur bénéficie des droits n'a pu être trouvé, lui interdire l'accès au procédé.

9. Procédé de configuration selon la revendication 2, **caractérisé en ce que** le pointeur vérifie quelle est la dernière étape du procédé atteinte, et **en ce que** le procédé démarre à l'étape suivante.

10. Procédé de configuration selon la revendication 2, **caractérisé en ce que** le procédé est arrêté lorsque le pointeur de chaque module a atteint la dernière étape du module.
